# EUROPÄISCHE PATENTSCHRIFT

(11) **EP 1 076 169 B1**
(45) Veröffentlichungstag und Bekanntmachung des Hinweises auf die Patenterteilung: **16.03.2005**
(21) Anmeldenummer: 00117196.6
(22) Anmeldetag: 11.08.2000
(51) Int. Cl.: F02M 25/028, F02M 31/04

(54) **Vorrichtung zur Befeuchtung der Einlassluft von Brennkraftmaschinen mit Turbolader**
Device for humidifying the intake air of a turbocharged combustion engine
Dispositif pour humidifier l'air d'admission d'un moteur à combustion turbochargé

(30) Priorität: 12.08.1999 DE 19938292
(43) Veröffentlichungstag der Anmeldung: 14.02.2001
(73) Patentinhaber: Munters Euroform GmbH, 52072 Aachen (DE)
(72) Erfinder: Wettergard, Jan, 19631 Kungsängen (SE)
(74) Vertreter: Patentanwälte Hauck, Graalfs, Wehnert, Döring, Siemons, Schildberg

(56) Entgegenhaltungen:
- EP-A- 0 916 836
- WO-A-95/23286
- US-A- 4 440 116
- US-A- 5 213 086
- US-A- 5 809 981
- PATENT ABSTRACTS OF JAPAN vol. 016, no. 082 (M-1215), 27. Februar 1992 (1992-02-27) & JP 03 264732 A (DAIHATSU DIESEL MFG CO LTD), 26. November 1991 (1991-11-26)
- PATENT ABSTRACTS OF JAPAN vol. 014, no. 447 (M-1029), 25. September 1990 (1990-09-25) & JP 02 176118 A (DAIHATSU DIESEL MFG CO LTD), 9. Juli 1990 (1990-07-09)

## Beschreibung

Die vorliegende Erfindung betrifft eine Brennkraftmaschine mit Turbolader und einer Vorrichtung zur Befeuchtung der Einlaßluft für die Brennkraftmaschine.

Es ist bekannt, die Einlaßluft von mit Turboladern versehenen Dieselbrennkraftmaschinen zu befeuchten, um auf diese Weise den NOx-Anteil im Abgas zu reduzieren. Ein derartiges Verfahren mit zugehöriger Vorrichtung ist in der WO 95/23286 beschrieben. Hierbei findet eine Befeuchtungseinrichtung Verwendung, die von der Einlaßluft und Wasser durchströmt wird, wobei die Einlaßluft vor der Befeuchtung durch den Kompressor des Turboladers komprimiert wird und die im Kühlwasser oder den Abgasen der Brennkraftmaschine steckende Energie zum Vorerhitzen des Wassers verwendet wird, bevor dieses in die Befeuchtungseinrichtung eingeführt wird. Hierbei findet somit eine Befeuchtung von komprimierter Luft Anwendung.

Eine Brennkraftmaschine mit Turbolader und einer Vorrichtung zur Befeuchtung der Einlaßluft für die Brennkraftmaschine ist ferner aus der US 4 440 116 A bekannt. Hierbei wird ein Kühlmittel in das Kraftstoff/Luft-Gemisch eingespritzt, das einer mit einem Turbolader versehenen Brennkraftmaschine zugeführt wird. Das Kühlmittel wird in einem Speicher gespeichert, der mit der Druckseite des Kompressors des Turboladers verbunden ist, und während Zeiträumen, in denen der Turbolader positive Drücke über einem vorgegebenen Niveau erzeugt, unter Druck gesetzt. Durch den Druck im Speicher wird das Kühlmittel zur Einlaßseite des Turboladers bewegt, um den Kraftstoff abzukühlen, und die Einspritzung wird unterbrochen, wenn sich die Drücke unter diesem Niveau befinden und keine Kühlung des Kraftstoff-Luft-Gemisches erforderlich ist. Bei dieser Veröffentlichung geht es somit um das Kühlen des Kraftstoff-Luft-Gemisches.

Der Erfindung liegt die Aufgabe zugrunde, eine Brennkraftmaschine mit Turbolader und einer Vorrichtung zur Befeuchtung der Einlaßluft für die Brennkraftmaschine zu schaffen, mit der auf besonders einfache Weise mit besonders geringem Aufwand eine NOx-Reduzierung im Abgas der Brennkraftmaschine erreichbar ist.

Diese Aufgabe wird durch eine Brennkraftmaschine gemäß Patentanspruch 1 gelöst.

Bei der erfindungsgemäßen Lösung wird die Einlaßluft im nicht-komprimierten Zustand befeuchtet. Um eine derartige Befeuchtung zu ermöglichen, wird die Einlaßluft vor dem Passieren der Befeuchtungseinrichtung vorerhitzt, wozu die den Kompressor des Turboladers verlassende komprimierte und bereits durch die Befeuchtungseinrichtung befeuchtete Einlaßluft verwendet wird. Die Vorerwärmung wird mit Hilfe eines Luft/Luft-Wärmetauschers realisiert, der von der komprimierten Einlaßluft passiert wird. Die komprimierte Einlaßluft, die sowohl durch die erfolgte Vorerhitzung als auch durch die Kompression im Kompressor erhitzt worden ist, gibt dem Luft/Luft-Wärmetauscher einen Teil ihrer Wärmeenergie auf die atmosphärische Einlaßluft ab und wird somit gekühlt. Es wird somit gekühlte komprimierte Luft der Brennkraftmaschine zugeführt.

Die Erfindung bezieht sich insbesondere auf Diesel- oder Gasmotoren, was nicht ausschließt, daß sie auch bei anderen Motoren Verwendung finden kann.

Die Befeuchtung der Einlaßluft in der Befeuchtungseinrichtung erfolgt adiabatisch.

Bei dem Luft/Luft-Wärmetauscher kann es sich um einen bekannten und bei Brennkraftmaschinen bereits vorhandenen Zwischenkühler (Intercooler) mit Luftkühlung handeln.

Beispielsweise wird die Luft im Kompressor des Turboladers durch den durchgeführten Kompressionsvorgang auf eine Temperatur in einem Bereich von 150-200 °C erhitzt. Im Vorerhitzungsschritt wird die atmosphärische Einlaßluft durch die erhitzte komprimierte Luft auf einen Temperaturbereich von 35-120 °C erhitzt. Gleichzeitig wird die erhitzte komprimierte Luft von 150-200 °C auf etwa 90-100 °C abgekühlt. Die entsprechende Befeuchtung läuft erfindungsgemäß ohne Erhitzung des Befeuchtungsmediums (Wasser) ab.

In Weiterbildung der Erfindung ist in Strömungsrichtung der Einlaßluft stromauf des Luft/Luft-Wärmetauschers eine weitere Befeuchtungseinrichtung angeordnet, der eine Erwärmungsvorrichtung für die Einlaßluft vorgeschaltet ist. Bei dieser Ausführungsform findet somit eine erste Vorerhitzung der Einlaßluft über die vorstehend erwähnte Erwärmungsvorrichtung statt, der eine Befeuchtung der Einlaßluft folgt. Hiernach wird über den Luft/Luft-Wärmetauscher mit Hilfe der komprimierten Einlaßluft die Einlaßluft weiter erwärmt (zweite Vorerhitzung), wonach die Einlaßluft erneut befeuchtet wird. Bei beiden Befeuchtungseinrichtungen handelt es sich um adiabatische Befeuchtungseinrichtungen.

Vorzugsweise ist die Erwärmungsvorrichtung für die Einlaßluft ein Luft/Wasser-Wärmetauscher zur Abgabe der Wärmeenergie des Kühlwassers der Brennkraftmaschine. Der Luft/Wasser-Wärmetauscher kann dabei direkt vom Kühlwasser durchflossen werden, oder es kann ein zusätzlicher Wasserkreislauf zwischengeschaltet werden.

Eine Alternative sieht vor, daß die Erwärmungsvorrichtung von einem Luft/Luft-Wärmetauscher gebildet ist, der zur Übertragung der Wärmeenergie des Abgases der Brennkraftmaschine auf die Einlaßluft dient. Natürlich kann auch bei dieser Ausführungsform ein Wasserkreislauf zwischengeschaltet sein.

Die den Luft/Luft-Wärmetauscher verlassende komprimierte, befeuchtete Luft kann vor der Einführung in die Brennkraftmaschine weiterbehandelt werden, insbesondere gekühlt und/oder nochmals befeuchtet werden. Eine Kühlung ist in der Regel erwünscht, da die den Luft/Luft-Wärmetauscher verlassende komprimierte Luft noch zu heiß ist. So sieht eine Ausführungsform der Erfindung vor, daß in den Strömungsweg der komprimierten und befeuchteten Einlaßluft zwischen den Luft/Luft-Wärmetauscher und die Brennkraftmaschine eine Kühlvorrichtung geschaltet ist. Hierfür kann ein normaler Zwischenkühler (Intercooler) verwendet werden.

Eine andere Alternative sieht vor, daß in den Strömungsweg der komprimierten und befeuchteten Einlaßluft zwischen den Luft/Luft-Wärmetauscher und die Brennkraftmaschine eine dritte Befeuchtungseinrichtung geschaltet ist. Hierdurch wird eine zusätzliche Befeuchtung und Abkühlung der Einlaßluft erreicht. Vorzugsweise ist der dritten Befeuchtungseinrichtung ein Wärmetauscher zur Erwärmung des Befeuchtungsmediums (Wasser) zugeordnet. Diese Ausführungsform entspricht der in der WO 95/23286 beschriebenen Ausführungsform, bei der die von komprimierter Luft durchströmte Befeuchtungseinrichtung mit erwärmtem Wasser für die Beenergie des Kühlwassers der Brennkraftmaschine. Der Luft/Wasser-Wärmetauscher kann dabei direkt vom Kühlwasser durchflossen werden, oder es kann ein zusätzlicher Wasserkreislauf zwischengeschaltet werden.

Eine Alternative sieht vor, daß die Erwärmungsvorrichtung von einem Luft/Luft-Wärmetauscher gebildet ist, der zur Übertragung der Wärmeenergie des Abgases der Brennkraftmaschine auf die Einlaßluft dient. Natürlich kann auch bei dieser Ausführungsform ein Wasserkreislauf zwischengeschaltet sein.

Die den Luft/Luft-Wärmetauscher verlassende komprimierte, befeuchtete Luft kann vor der Einführung in die Brennkraftmaschine weiterbehandelt werden, insbesondere gekühlt und/oder nochmals befeuchtet werden. Eine Kühlung ist in der Regel erwünscht, da die den Luft/Luft-Wärmetauscher verlassende komprimierte Luft noch zu heiß ist. So sieht eine Ausführungsform der Erfindung vor, daß in den Strömungsweg der komprimierten und befeuchteten Einlaßluft zwischen den Luft/Luft-Wärmetauscher und die Brennkraftmaschine eine Kühlvorrichtung geschaltet ist. Hierfür kann ein normaler Zwischenkühler (Intercooler) verwendet werden.

Eine andere Alternative sieht vor, daß in den Strömungsweg der komprimierten und befeuchteten Einlaßluft zwischen den Luft/Luft-Wärmetauscher und die Brennkraftmaschine eine dritte Befeuchtungseinrichtung geschaltet ist. Hierdurch wird eine zusätzliche Befeuchtung und Abkühlung der Einlaßluft erreicht. Vorzugsweise ist der dritten Befeuchtungseinrichtung ein Wärmetauscher zur Erwärmung des Befeuchtungsmediums (Wasser) zugeordnet. Diese Ausführungsform entspricht der in der WO 95/23286 beschriebenen Ausführungsform, bei der die von komprimierter Luft durchströmte Befeuchtungseinrichtung mit erwärmtem Wasser für die Befeuchtung beaufschlagt wird und die Erwärmung des Wassers über einen Wasser/Wasser- oder Wasser/Luft-Wärmetauscher erfolgt, der entweder vom Kühlwasser oder vom Abgas der Brennkraftmaschine durchströmt wird.

Ein Luftfilter ist normalerweise stromauf des Luft/Luft-Wärmetauschers im Strömungsweg der Einlaßluft angeordnet. Zur Entlastung des Luftfilters kann dieser jedoch auch stromab der Befeuchtungseinrichtung im Strömungsweg der Einlaßluft vorgesehen sein. Mit dieser Ausführungsform wird ein Teil der Verunreinigungen bereits über die Befeuchtungseinrichtung abgeführt.

Die erfindungsgemäß ausgebildete Brennkraftmaschine betrifft insbesondere Dieselbrennkraftmaschinen von Schiffen, Booten u.dgl. Fahrzeugen. Die Dieselbrennkraftmaschinen von derartigen Fahrzeugen besitzen häufig einen Meerwasserkreis (Salzwasserkreis), dessen Wasser entweder selbst zur Kühlung der Dieselbrennkraftmaschine verwendet wird oder bei Süßwasserkühlung zur Kühlung des Kühlwassers über einen Wärmetauscher dient. Wenn ein derartiger Meerwasserkreis vorhanden ist, wird (werden) auch die Befeuchtungseinrichtung(en) zweckmäßigerweise mit Salzwasser beaufschlagt, so daß keine spezielle Süßwasserquelle erforderlich ist. Das Salzwasser kann dabei aufgefangen und wieder im Kreislauf in die zur Befeuchtungseinrichtung führende Zuleitung zurückgeführt werden.

Natürlich schließt dies nicht aus, daß auch Flußwasser oder Leitungswasser anstelle von Salzwasser verwendet werden kann.

Die vorstehend erwähnte Kühlvorrichtung wird zweckmäßigerweise in Abhängigkeit vom Turboladerdruck gesteuert, um eine Kondensation zu vermeiden.

Die Erfindung wird nachfolgend anhand von zwei Ausführungsbeispielen in Verbindung mit der Zeichnung im einzelnen erläutert. Es zeigen:
- Figur 1: eine Schemadarstellung einer Dieselbrennkraftmaschine mit Turbolader und Befeuchtungsvorrichtung; und
- Figur 2: eine Schemadarstellung einer weiteren Ausführungsform einer Dieselbrennkraftmaschine mit Befeuchtungsvorrichtung.

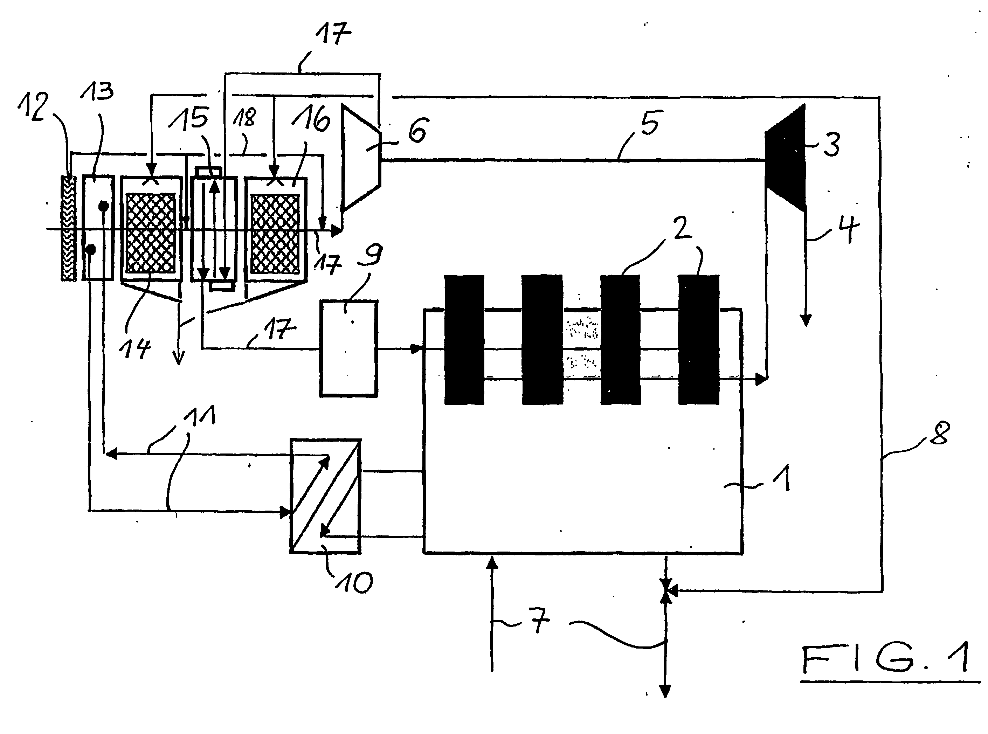

Bei der in Figur 1 dargestellten Dieselbrennkraftmaschine 1 handelt es sich um einen Schiffsmotor, der vier Zylinder 2 aufweist. Das Abgas der Brennkraftmaschine 1 wird bei 4 abgeleitet und treibt eine Turbine 3 an, die Teil eines Turboladers bildet. Der Turbolader umfaßt ferner einen Kompressor 6, der über eine Welle 5 von der Turbine 3 angetrieben wird. Der Kompressor 6 dient zum Verdichten der Einlaßluft der Dieselbrennkraftmaschine, die über einen bei 17 dargestellten Strömungsweg den jeweiligen Zylindern 2 zugeführt wird.

Atmosphärische Einlaßluft gelangt über einen Luftfilter 12 zum Kompressor 6. Im Strömungsweg der Einlaßluft befinden sich in dieser Reihenfolge vom Luftfilter 12 zum Kompressor 6 ein Luft/Wasser-Wärmetauscher 13, eine zweite Befeuchtungseinrichtung 14, ein Luft/Luft-Wärmetauscher 15 und eine erste Befeuchtungseinrichtung 16. Die Einlaßluft passiert den Luft/Wasser-Wärmetauscher 13 und wird dabei vorerhitzt. In der nachfolgenden Befeuchtungseinrichtung 14 wird die vorerhitzte Luft befeuchtet, wodurch sie abgekühlt wird. Im folgenden Luft/Luft-Wärmetauscher 15 erfolgt eine erneute Erhitzung und in der nachfolgenden Befeuchtungseinrichtung 16 eine zusätzliche Befeuchtung, bevor die Einlaßluft in den Kompressor 6 eintritt.

Die vom Kompressor 6 abgegebene komprimierte, befeuchtete Luft gelangt über den Strömungsweg 17 in den Luft/Luft-Wärmetauscher 15, wo sie einen Teil ihrer Wärmeenergie auf die den Wärmetauscher beströmende Einlaßluft abgibt. Die komprimierte, abgekühlte Luft verläßt den Wärmetauscher 15 und gelangt in einen Zwischenkühler 9, in dem sie nochmals abgekühlt wird. Die Luft wird dann den Zylindern 2 der Dieselbrennkraftmaschine 1 zugeführt.

Der hier gezeigte Schiffsmotor besitzt einen Meerwasserkreis (Salzwasserkreis) 7, der zum Kühlen des Motors dient. Von diesem Kreis 7 wird über eine Zweigleitung 8 Salzwasser abgezweigt, das den beiden Befeuchtungseinrichtungen 14 und 16 zugeführt wird. Die Befeuchtungseinrichtungen besitzen ein Füllkörperbett, das von oben nach unten vom Salzwasser durchströmt wird, wobei das Salzwasser über geeignete Düsen auf das Füllkörperbett gesprüht wird. Das Füllkörperbett wird in Querrichtung von der Einlaßluft durchströmt, wobei diese entsprechende Feuchtigkeit aufnimmt.

In den Strömungsweg 17 der Einlaßluft kann stromab der Befeuchtungseinrichtungen eine Vorrichtung zum Abtrennen von mitgeführten Salzpartikeln eingeschaltet sein, um ein Mitführen von Salzpartikeln in die Zylinder der Brennkraftmaschine zu verhindern.

In den Kühlwasserkreis der Dieselbrennkraftmaschine ist ein Wasser/Wasser-Wärmetauscher 10 eingeschaltet, der zur Übertragung der im Kühlwasser steckenden Wärmeenergie auf einen Wasserkreislauf 11 dient. Dieser Wasserkreislauf enthält den vorstehend erwähnten Luft/Wasser-Wärmetauscher 13 zum Vorerhitzen der Einlaßluft. Das durch den Kreis 11 strömende erwärmte Wasser fließt durch die Rohrschlangen des Wärmetauschers 13 und erwärmt dabei die die Rohrschlangen umströmende Einlaßluft.

Zum Vorerhitzen der Einlaßluft kann auch das Abgas der Dieselbrennkraftmaschine dienen. Der Wärmetauscher 13 kann daher auch ein Luft/Luft-Wärmetauscher sein.

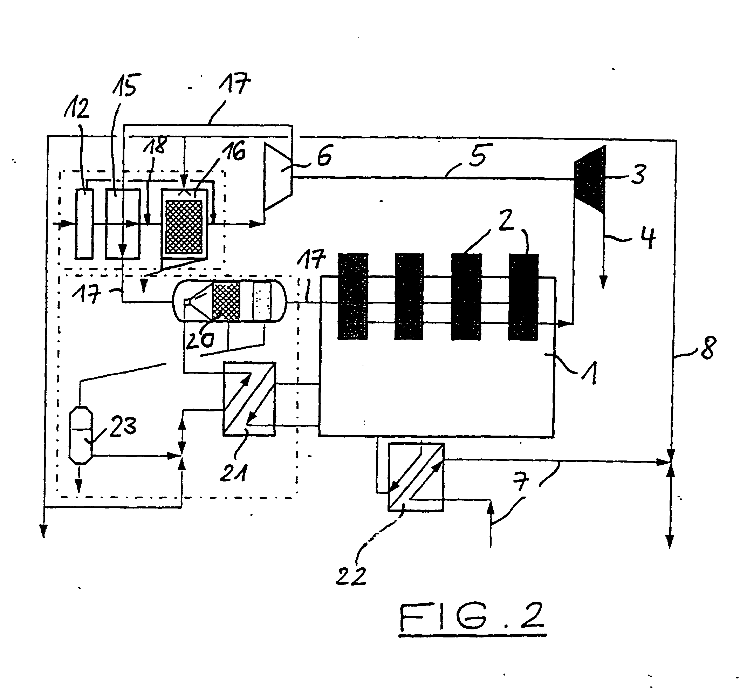

In Figur 2 ist ebenfalls eine Schiffsdieselbrennkraftmaschine 1 mit vier Zylindern 2 dargestellt, die einen Turbolader bestehend aus einer vom Abgas betriebenen Turbine 3, einem Kompressor 6 und einer Welle 5 zum Antreiben des Kompressors aufweist. Auch bei dieser Ausführungsform ist der Strömungsweg der Einlaßluft für die Brennkraftmaschine mit 17 bezeichnet. Im übrigen bezeichnen gleiche Bezugszeichen gleiche Teile wie in Figur 1.

Die atmosphärische Einlaßluft passiert in dieser Reihenfolge bis zum Kompressor 6 einen Luftfilter 12, einen nachgeschalteten Luft/Luft-Wärmetauscher 15 sowie eine nachgeschaltete Befeuchtungseinrichtung 16. Die Luft wird dabei im Luft/Luft-Wärmetauscher 15 vorerhitzt und in der Befeuchtungseinrichtung 16 befeuchtet. Sie wird im Kompressor 6 komprimiert, dann durch den Wärmetauscher 15 zum Vorerhitzen der Einlaßluft geführt und schließlich vor dem Einführen in die Brennkraftmaschine durch eine weitere Behandlungsstufe geleitet.

Auch bei dieser Ausführungsform wird zum Befeuchten der Einlaßluft in der Befeuchtungseinrichtung 16 Salzwasser verwendet, das über eine Zweigleitung 8 aus einem Meerwasserkreis (Salzwasserkreis) 7 abgezweigt wird. Bei dieser Ausführungsform wird zum Kühlen der Brennkraftmaschine 1 Süßwasser verwendet, das einen Wasser/Wasser-Wärmetauscher 22 passiert, in dem es vom Meerwasser des Meerwasserkreises 7 gekühlt wird. Das Kühlwasser passiert einen weiteren wärmetauscher 21, der Bestandteil der weiteren Behandlungsstufe ist, die nachfolgend beschrieben wird.

Die weitere Behandlungsstufe für die komprimierte und befeuchtete Einlaßluft besitzt eine dritte Befeuchtungseinrichtung 20, die als liegender Behälter ausgebildet ist und ebenfalls ein Füllkörperbett aufweist. Das Füllkörperbett wird von der Einlaßluft und von Süßwasser durchströmt (Gleichstrom bzw. Kreuzstrom), wobei die komprimierte Einlaßluft befeuchtet wird, die nach dem Passieren der Befeuchtungseinrichtung 20 den Zylindern 2 der Brennkraftmaschine 1 zugeführt wird. Das zum Befeuchten verwendete Wasser gelangt aus der Befeuchtungseinrichtung 20 in einen Lagerbehälter 23 und von dort über den Wärmetauscher 21 wieder in die Befeuchtungseinrichtung. Im Wärmetauscher 21 wird es durch das Kühlwasser der Brennkraftmaschine erwärmt, so daß in der Befeuchtungseinrichtung 20 komprimierte Luft und erwärmtes Wasser aufeinandertreffen.

Figur 2 zeigt eine Ausführungsform, bei der der gesamte Wasserkreis ein Salzwasserkreis ist, d.h. auch das restliche Salzwasser aus der Zweigleitung 8 wird über den Wärmetauscher 21 geführt. Hierbei wird somit bei beiden Befeuchtungseinrichtungen mit Salzwasser gearbeitet. Lediglich der Kühlwasserkreis ist ein Süßwasserkreis.

Die in Figur 2 gezeigte Ausführungsform ist für Fälle geeignet, bei denen eine besonders starke Befeuchtung der Einlaßluft gewünscht wird.

Sowohl in Figur 1 als auch in Figur 2 ist ferner eine Bypass-Leitung 18 gezeigt, die vom Luftfilter 12 ausgeht und in der ein geeignetes Mischventil vorgesehen ist, um eine Umgehungsmöglichkeit der Stufen 13, 14, 15 und 16 zu ermöglichen. Die Bypass-Leitung 18 weist eine oder mehrere Abzweigleitungen auf, die zwischen den Stufen in den Hauptströmungsweg der Luft mündet bwz. münden.

Es versteht sich, daß neben den Stufen 13, 14 auch weitere Stufen dem Wärmetauscher 15 vorgeschaltet sein können. Beispielsweise kann zusätzlich ein Partikelabscheider für Staub-, Salzpartikel etc. vorgesehen sein.

Bei einer weiteren Alternative ist in Strömungsrichtung der Einlaßluft stromab der Befeuchtungseinrichtung und stromauf des Kompressors eine weitere Befeuchtungseinrichtung angeordnet, der eine Erwärmungsvorrichtung für die Einlaßluft vorgeschaltet ist. Durch diese Maßnahmen kann die Temperaturdifferenz - im Vergleich zu der Lösung, bei der die weitere Befeuchtungseinrichtung und die Erwärmungsvorrichtung für die Einlaßluft stromauf des Luft/Luft-Wärmetauschers angeordnet sind - am Luft/Luft-Wärmetauscher erhöht werden, wodurch die Wärmeübertragung an diesem Wärmetauscher verbessert wird und ein kleinerer Wärmetauscher verwendet werden kann. Bei dieser Lösung kann jedoch das Kondensationsrisiko größer sein.

Um dieses Kondensationsrisiko zu verringern, wird als erfindungsgemäße Variante vorgeschlagen, zwischen Einlaß und Auslaß der Kühlvorrichtung eine Bypass-Leitung mit Bypass-Ventil zu schalten. Auf diese Weise kann die tatsächliche Luftfeuchtigkeit so gesteuert werden, daß keine Kondensation stattfindet.

## Patentansprüche

1. Brennkraftmaschine (1) mit Turbolader und einer Vorrichtung zur Befeuchtung der Einlaßluft für die Brennkraftmaschine (1), die eine Befeuchtungseinrichtung (16), durch die die Einlaßluft und Befeuchtungsflüssigkeit strömen und miteinander in Kontakt treten und die in Strömungsrichtung der Einlaßluft stromauf des Kompressors (6) des Turboladers angeordnet ist, und einen in Strömungsrichtung der Einlaßluft stromauf der Befeuchtungseinrichtung (16) angeordneten, zum Vorerhitzen der Einlaßluft dienenden Luft/Luft-Wärmetauscher (15), der von der atmosphärischen Einlaßluft und der befeuchteten und komprimierten Einlaßluft vom Kompressor (6) durchströmt wird, aufweist.

2. Brennkraftmaschine nach Anspruch 1, **dadurch gekennzeichnet, daß** in Strömungsrichtung der Einlaßluft stromauf des Luft/Luft-Wärmetauschers (15) eine weitere Befeuchtungseinrichtung (14) angeordnet ist, der eine Erwärmungsvorrichtung für die Einlaßluft vorgeschaltet ist.

3. Brennkraftmaschine nach Anspruch 1, **dadurch gekennzeichnet, daß** in Strömungsrichtung der Einlaßluft stromab der Befeuchtungseinrichtung (16) und stromauf des Kompressors (6) eine weitere Befeuchtungseinrichtung angeordnet ist, der eine Erwärmungsvorrichtung für die Einlaßluft vorgeschaltet ist.

4. Brennkraftmaschine nach Anspruch 2 oder 3, **dadurch gekennzeichnet, daß** die Erwärmungsvorrichtung ein Luft/Wasser-Wärmetauscher (13) zur Abgabe der Wärmeenergie des Kühlwassers der Brennkraftmaschine (1) ist.

5. Brennkraftmaschine nach einem der vorangehenden Ansprüche, **dadurch gekennzeichnet, daß** in den Strömungsweg der komprimierten und befeuchteten Einlaßluft zwischen den Luft/Luft-Wärmetauscher (15) und die Brennkraftmaschine (1) eine Kühlvorrichtung (9) geschaltet ist.

6. Brennkraftmaschine nach Anspruch 5, **dadurch gekennzeichnet, daß** zwischen Einlaß und Auslaß der Kühlvorrichtung (9) eine Bypass-Leitung mit Bypass-Ventil geschaltet ist.

7. Brennkraftmaschine nach einem der vorangehenden Ansprüche, **dadurch gekennzeichnet, daß** in den Strömungsweg der komprimierten und befeuchteten Einlaßluft zwischen den Luft/Luft-Wärmetauscher (15) und die Brennkraftmaschine (1) eine dritte Befeuchtungseinrichtung (20) geschaltet ist.

8. Brennkraftmaschine nach Anspruch 7, **dadurch gekennzeichnet, daß** der dritten Befeuchtungseinrichtung (20) ein wärmetauscher (21) zur Erwärmung des Befeuchtungsmediums zugeordnet ist.

9. Brennkraftmaschine nach einem der vorangehenden Ansprüche, **dadurch gekennzeichnet, daß** ein Luftfilter stromab der Befeuchtungseinrichtung im Strömungsweg der Einlaßluft angeordnet ist.

10. Brennkraftmaschine nach einem der vorangehenden Ansprüche, **dadurch gekennzeichnet, daß** sie einen Wärmetauscher (10, 21, 22) zum Kühlen des Kühlwassers aufweist.

11. Brennkraftmaschine nach Anspruch 10, **dadurch gekennzeichnet, daß** der Wärmetauscher (22) Teil eines Meerwasserkreises (Salzwasserkreises) (7) ist.

12. Brennkraftmaschine nach einem der vorangehenden Ansprüche, **dadurch gekennzeichnet, daß** die Befeuchtungseinrichtung(en) (14, 16, 20) mit Salzwasser beaufschlagt wird (werden).

13. Brennkraftmaschine nach Anspruch 5, **dadurch gekennzeichnet, daß** die Kühlvorrichtung (9) in Abhängigkeit vom Turboladerdruck gesteuert wird.

14. Brennkraftmaschine nach einem der vorangehenden Ansprüche, **dadurch gekennzeichnet, daß** die Befeuchtungsvorrichtung einen Partikelabscheider aufweist.

## Claims

1. An internal combustion engine (1) comprising a turbocharger and a device for moistening the inlet air for the internal combustion engine (1), said moistening device having a moistening means (16) through which the inlet air and the moistening liquid flow and contact with one another and which is arranged upstream of the compressor (6) of the turbocharger in flow direction of the inlet air, and an air/air heat exchanger (15) for preheating the inlet air arranged upstream of the moistening means (16) in flow direction of the inlet air and flown through by the atmospheric inlet air and the moistened and compressed inlet air of the compressor (6).

2. The internal combustion engine according to claim 1, **characterized in that** another moistening means (14) is arranged upstream of the air/air heat exchanger (5) in flow direction of the inlet air and having prearranged a heating device for the inlet air.

3. The internal combustion engine according to claim 1, **characterized in that** another moistening means is arranged downstream of the moistening means (16) and upstream of the compressor (6) in flow direction of the inlet air and having prearranged a heating device for the inlet air.

4. The internal combustion engine according to claim 2 or 3, **characterized in that** the heating device is an air/water heat exchanger (13) for discharging the heat energy of the cooling water of the internal combustion engine (1).

5. The internal combustion engine according to one of the preceding claims, **characterized in that** a cooling device (9) is arranged in the flow path of the compressed and moistened inlet air between the air/air heat exchanger (15) and the internal combustion engine (1).

6. The internal combustion engine according to claim 5, **characterized in that** a bypass line with a bypass valve is arranged between the inlet and the outlet of the cooling device (9).

7. The internal combustion engine according to one of the preceding claims, **characterized in that** a third moistening means (20) is arranged in the flow path of the compressed and moistened inlet air between the air/air heat exchanger (15) and the internal combustion engine (1).

8. The internal combustion engine according to claim 7, **characterized in that** the third moistening means (20) is associated with a heat exchanger (21) for heating the moistening medium.

9. The internal combustion engine according to one of the preceding claims, **characterized in that** an air filter is arranged downstream of the moistening means in the flow path of the inlet air.

10. The internal combustion engine according to one of the preceding claims, **characterized in that** it includes a heat exchanger (10, 21, 22) for cooling the cooling water.

11. The internal combustion engine according to claim 10, **characterized in that** the heat exchanger (22) is part of a sea water circuit (salt water circuit) (7).

12. The internal combustion engine according to one of the preceding claims, **characterized in that** the moistening means (14, 16, 20) is or are applied with salt water.

13. The internal combustion engine according to claim 5, **characterized in that** the cooling device (9) is controlled in response to the turbocharger pressure.

14. The internal combustion engine according to one of the preceding claims, **characterized in that** the moistening means includes a particle separator.

## Revendications

1. Moteur à combustion (1) comprenant un turbochargeur et un dispositif pour humidifier l'air d'admission pour le moteur à combustion (1), qui présente un dispositif d'humidification (16) par lequel l'air d'admission et le liquide d'humidification s'écoulent et entrent en contact l'un avec l'autre et qui est disposé en amont du compresseur (6) du turbochargeur dans le sens d'écoulement de l'air d'admission et un échangeur de chaleur air/air (15) servant à préchauffer l'air d'admission, disposé en amont du dispositif d'humidification (16) dans le sens d'écoulement de l'air d'admission, qui est parcouru par l'air d'admission atmosphérique et par l'air d'admission humidifié et comprimé en provenance du compresseur (6).

2. Moteur à combustion selon la revendication 1, **caractérisé en ce qu'**un autre dispositif d'humidification (14), qui précède un dispositif de réchauffement pour l'air d'admission, est disposé en amont de l'échangeur de chaleur air/air (15) dans le sens d'écoulement de l'air d'admission.

3. Moteur à combustion selon la revendication 1, **caractérisé en ce qu'**un autre dispositif d'humidification, qui précède un dispositif de réchauffement pour l'air d'admission, est disposé en aval du dispositif d'humidification (16) et en amont du compresseur (6) dans le sens d'écoulement de l'air d'admission.

4. Moteur à combustion selon la revendication 2 ou 3, **caractérisé en ce que** le dispositif de réchauffement est un échangeur de chaleur air / eau (13) destiné à céder l'énergie calorifique de l'eau de refroidissement du moteur à combustion (1).

5. Moteur à combustion selon une des revendications précédentes, **caractérisé en ce qu'**un dispositif de refroidissement (9) est intercalé entre l'échangeur de chaleur air/air (15) et le moteur à combustion (1) sur le trajet d'écoulement de l'air d'admission comprimé et humidifié.

6. Moteur à combustion selon la revendication 5, **caractérisé en ce qu'**une conduite de dérivation avec soupape de dérivation est intercalée entre l'entrée et la sortie du dispositif de refroidissement (9)

7. Moteur à combustion selon une des revendications précédentes, **caractérisé en ce qu'**un troisième dispositif d'humidification (20) est intercalé entre l'échangeur de chaleur air /air (15) et le moteur à combustion (1) sur le trajet d'écoulement de l'air d'admission comprimé et humidifié.

8. Moteur à combustion selon la revendication 7, **caractérisé en ce qu'**un échangeur de chaleur (21) destiné à réchauffer l'agent d'humidification est coordonné au troisième dispositif d'humidification (20).

9. Moteur à combustion selon une des revendications précédentes, **caractérisé en ce qu'**un filtre à air est disposé en aval du dispositif d'humidification sur le trajet d'écoulement de l'air d'admission.

10. Moteur à combustion selon une des revendications précédentes, **caractérisé en ce qu'**il présente un échangeur de chaleur (10, 21, 22) destiné à refroidir l'eau de refroidissement.

11. Moteur à combustion selon la revendication 10, **caractérisé en ce que** l'échangeur de chaleur (22) fait partie d'un circuit d'eau de mer (circuit d'eau salée) (7).

12. Moteur à combustion selon une des revendications précédentes, **caractérisé en ce que** le(s) dispositif(s) d'humidification (14, 16, 20) est (sont) alimenté(s) en eau salée.

13. Moteur à combustion selon la revendication 5, **caractérisé en ce que** le dispositif de refroidissement (9) est commandé en fonction de la pression du turbochargeur.

14. Moteur à combustion selon une des revendications précédentes, **caractérisé en ce que** le dispositif d'humidification présente un séparateur de particules.
